(19) Europäisches Patentamt
European Patent Office
Office européen des brevets

(11) **EP 3 434 442 A1**

(12) **EUROPEAN PATENT APPLICATION**
published in accordance with Art. 153(4) EPC

(43) Date of publication:
**30.01.2019 Bulletin 2019/05**

(51) Int Cl.:
**B29C 61/06** (2006.01)    **B29C 55/02** (2006.01)
**C08J 5/18** (2006.01)    **B65D 65/40** (2006.01)
**C08G 63/183** (2006.01)

(21) Application number: **17770232.1**

(22) Date of filing: **21.03.2017**

(86) International application number:
**PCT/JP2017/011274**

(87) International publication number:
**WO 2017/164190 (28.09.2017 Gazette 2017/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.03.2016 JP 2016057430**

(71) Applicant: **Kuraray Co., Ltd.**
**Kurashiki-shi, Okayama 710-0801 (JP)**

(72) Inventors:
• **SAKANO, Takeshi**
**Okayama 713-8550 (JP)**
• **TANABE, Soichiro**
**Okayama 713-8550 (JP)**

(74) Representative: **Müller-Boré & Partner**
**Patentanwälte PartG mbB**
**Friedenheimer Brücke 21**
**80639 München (DE)**

(54) **SEALANT FILM AND PRODUCTION METHOD THEREFOR**

(57)    There is provided a sealant film comprising a layer made of polyester (A) comprising terephthalic acid units, ethylene glycol units, diethylene glycol units and other comonomer units, wherein polyester (A) comprises 25 to 50 mol% of terephthalic acid units, 25 to 49.5 mol% of ethylene glycol units, 0.5 to 2.5 mol% of diethylene glycol units and 2 to 25 mol% of other comonomer units having 5 or more carbon atoms; a crystallinity degree of the sealant film is less than 16 %; and the sealant film is a stretched film having a shrinkage ratio of 6 % or more in a maximum shrinkage direction when it is allowed to stand at 125 °C for 20 sec. The sealant film exhibits excellent mechanical properties, particularly tensile elongation, and also excellent heat sealability and non-adsorptivity.

[FIG.1]

Inside

EP 3 434 442 A1

**Description**

TECHNICAL FIELD

The present invention relates to a sealant film made of a polyester comprising terephthalic acid units and ethylene glycol units as main components, and a production method therefor.

BACKGROUND ART

Sealant films are extensively used in the field of a package material for foods, beverage, medicals, cosmetics and medical devices. The sealant film is disposed in the innermost layer of the packaging material and can seal a packed material by heat sealing. Known resins used as such a sealant film include polyolefins such as polyethylene and polypropylene; ionomers; and ethylene-methyl methacrylate copolymers. However, an organic compound tends to be adsorbed by these resins. Therefore, a sealant film made of the resin may disadvantageously adsorb odorous components, contents and so on.

It is known that a polyester such as polyethylene terephthalate (hereinafter, sometimes abbreviated as "PET") are a resin which is resistant to adsorption of organic compounds and which exhibits good non-adsorptivity. Furthermore, a polyester is excellent in additional properties such as mechanical properties, gas barrier properties, flavor barrier properties and transparency. Furthermore, a molded article made of a polyester reduces concerns about residual monomers and hazardous additives, and is very hygienic and safe.

Patent Reference No. 1 has described a non-adsorptive sealant film comprising a base resin layer, an adhesive layer and a seal layer, wherein the seal layer is made of an amorphous copolymerized polyester having a glass transition temperature of 70 to 90°C. In an example in Patent Reference No. 1, there is described a sealant film produced by laminating a film formed by extrusion molding of an amorphous copolymerized polyester (seal layer) and a biaxial stretched polyester film (base resin layer) via an adhesive. However, a seal layer in the sealant film described in Patent Reference No. 1 has unsatisfactory mechanical properties, particularly tensile elongation.

It is generally known that for improving mechanical properties of a film, a film is oriented by uniaxial stretching or biaxial stretching. However, stretching accelerates oriented crystallization of the film, disadvantageously leading to deterioration in heat sealing ability. Furthermore, in producing a packaging container, a strip tape produced by slitting a sealant film is sometimes used for preventing leakage of contents from an overlapping part in the container. However, a tensile elongation of the strip tape may be insufficient, so that the tape is broken during producing a packaging container, leading to deterioration in productivity. Thus, a material excellent in both mechanical properties, particularly tensile elongation and heat sealability has been continuously needed in the market.

PRIOR ART REFERENCES

Patent References

Patent Reference No. 1: JP 2015-66802A

SUMMARY OF THE INVENTION

PROBLEMS TO BE SOLVED BY THE INVENTION

To solve the above problems, an objective of the present invention is to provide a sealant film excellent in mechanical properties, particularly tensile elongation, and excellent in heat sealability and non-adsorptivity.

MEANS FOR SOLVING THE PROBLEMS

The above problems can be solved by providing a sealant film comprising a layer made of polyester (A) comprising terephthalic acid units, ethylene glycol units, diethylene glycol units and other comonomer units, wherein polyester (A) comprises 25 to 50 mol% of terephthalic acid units, 25 to 49.5 mol% of ethylene glycol units, 0.5 to 2.5 mol% of diethylene glycol units and 2 to 25 mol% of other comonomer units having 5 or more carbon atoms, a crystallinity degree of the sealant film is less than 16 %, and the sealant film is a stretched film having a shrinkage ratio of 6 % or more in a maximum shrinkage direction when it is allowed to stand at 125 °C for 20 sec.

The sealant film suitably has an elongation at break of 150 % or more as determined by a tensile test under the conditions of a temperature of 23 °C, a relative humidity of 65 % and a tension rate of 50 mm/min. It is also suitable that the polyester comprises isophthalic acid units.

It is suitable that the sealant film is a single-layer film with a thickness of 20 to 200 μm.

It is also suitable that the sealant film is a multi-layer film comprising a layer made of polyester (A) and a layer made of polyester (B), wherein polyester (B) comprises 45 to 50 mol% of terephthalic acid units, 42.5 to 49.5 mol% of ethylene glycol units, 0.5 to 2.5 mol% of diethylene glycol units and 0 to 5 mol% of other comonomer units having 5 or more carbon atoms, the layer made of polyester (A) is disposed in at least one of the surfaces, and formula (1) is satisfied;

$$a - b \geq 1 \qquad (1)$$

wherein

 a: a content of the other comonomer units in polyester (A) (mol%)
 b: a content of the other comonomer units in polyester (B) (mol%).

Here, it is more suitable that the layer made of polyester (A) has a thickness of 2 to 200 μm and the layer made of polyester (B) has a thickness of 5 to 100 μm.

The above problems can be also solved by providing a sealing tape produced by slitting the sealant film. A suitable embodiment of the sealing tape is a strip tape for a packaging container made of the sealing tape.

The above problems can be also solved by providing a method for producing the sealant film comprising extrusion-molding polyester (A) to form a film and then uniaxially stretching the film. Here, it is suitable that a stretching ratio of the uniaxial stretching is 1.1 to 3.5.

The above problems can be also solved by providing a method for producing a sealant film, comprising extrusion-molding polyester (A) to form a film and then biaxially stretching the film. Here, it is suitable that an area stretching factor in the biaxial stretching is 1.1 to 9.0.

EFFECTS OF THE INVENTION

A sealant film of the present invention is excellent in mechanical properties, particularly tensile elongation, and excellent in heat sealability and non-adsorptivity. Such a sealant film is, therefore, suitably used as, for example, an innermost layer in various packaging materials. Furthermore, according to a production method of the present invention, such a sealant film can be conveniently produced.

BRIEF DESCRIPTION OF THE DRAWINGS

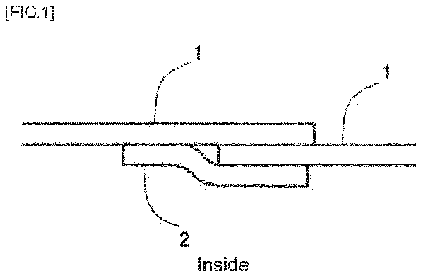

FIG. 1 shows a seal part in a cup in Examples.

MODES FOR CARRYING OUT THE INVENTION

A sealant film of the present invention is a sealant film comprising a layer made of polyester (A) comprising terephthalic acid units, ethylene glycol units, diethylene glycol units and other comonomer units, wherein polyester (A) comprises 25 to 50 mol% of terephthalic acid units, 25 to 49.5 mol% of ethylene glycol units, 0.5 to 2.5 mol% of diethylene glycol units and 2 to 25 mol% of other comonomer units having 5 or more carbon atoms, a crystallinity degree of the sealant film is less than 16 %, and the sealant film is a stretched film having a shrinkage ratio of 6 % or more in a maximum shrinkage direction when it is allowed to stand at 125 °C for 20 sec.

In polyester (A) used in the present invention, terephthalic acid units account for half or more of the dicarboxylic acid units, and ethylene glycol units account for half or more of the diol units. Therefore, a polyethylene terephthalate unit is a main component. Other comonomer units having 5 or more carbon atoms contained by 2 to 25 mol% reduce regularity of a polyethylene terephthalate crystal, leading to reduction in crystallinity and a melting point.

A content of terephthalic acid units in polyester (A) is 25 to 50 mol%. If the content is too lower than the range, heat resistance is so reduced that a resin during polymerization may be significantly discolored and a resin with high polymerization degree cannot be obtained. A content of terephthalic acid units is suitably 30 mol% or more, more suitably 35 mol% or more.

A content of ethylene glycol units in polyester (A) is 25 to 49.5 mol%. If the content is too lower than the range, a glass transition temperature is lowered, leading to significant reduction in heat resistance and deterioration in gas barrier properties. A content of ethylene glycol units is suitably 30 mol% or more, more suitably 35 mol% or more.

A content of diethylene glycol units in polyester (A) is 0.5 to 2.5 mol%. Generally, the polyester contains byproduct units formed by dimerization of ethylene glycol during the polycondensation reaction. A content of diethylene glycol units is suitably 2 mol% or less.

Polyester (A) contains 2 to 25 mol% of comonomer units other than terephthalic acid units, ethylene glycol units and diethylene glycol units. Two mol% or more of such other comonomer units can reduce crystallinity and melting point of polyethylene terephthalate, and thus heat sealability can be improved. A content of the other comonomer units is suitably 3 mol% or more, more suitably 4 mol% or more, further suitably 5 mol% or more. Meanwhile, if a content of the other comonomer units is more than 25 mol%, heat resistance is insufficient. A content of the other comonomer units is suitably 20 mol% or less, more suitably 15 mol% or less. A content of each monomer unit in polyester (A) can be calculated from $^1$H-NMR spectrum. Polyester (A) can contain multiple types of polyesters. Here, a resin formed by melt-kneading multiple types of polyesters is analyzed to determine a content of each monomer unit.

A carbon number of the other comonomer unit is 5 or more. If the carbon number is less than 5, a boiling point of the starting comonomer is lowered and thus it volatilizes during the condensation polymerization reaction, so that recovery of ethylene glycol may be difficult. With the carbon number of 5 or more, crystallinity of polyethylene terephthalate can be effectively reduced. The upper limit of the carbon number is generally, but not limited to, 50 or less. The other comonomer units contained in polyester (A) can be one type or combination of two or more types.

The other comonomer unit principally includes a dicarboxylic acid unit other than a terephthalic acid unit; a diol unit other than an ethylene glycol unit and a diethylene glycol unit; and a bifunctional compound unit such as a hydroxycarboxylic acid unit. A bifunctional compound unit used as the other comonomer unit is preferably a dicarboxylic acid unit other than a terephthalic acid unit; and a diol unit other than an ethylene glycol unit and a diethylene glycol unit. The bifunctional compound unit can be combined with a polyfunctional compound unit having 3 or more carboxyl or hydroxy groups, or a monofunctional compound unit such as a monocarboxylic acid unit or a monoalcohol unit.

Examples of a dicarboxylic acid unit used as the other comonomer unit include those derived from an aliphatic dicarboxylic acid or an ester-forming derivative thereof such as glutaric acid, adipic acid, azelaic acid, sebacic acid and a dimer acid; alicyclic dicarboxylic acid or an ester-forming derivative thereof such as cyclohexanedicarboxylic acid, norbornenedicarboxylic acid and tricyclodecanedicarboxylic acid; or an aromatic dicarboxylic acid or an ester-forming derivative thereof such as isophthalic acid, phthalic acid, biphenyldicarboxylic acid, diphenyl ether dicarboxylic acid, diphenylsulfonedicarboxylic acid, diphenyl ketone dicarboxylic acid, sodium sulfoisophthalate, 2,6-naphthalenedicarboxylic acid, 1,4-naphthalenedicarboxylic acid and 2,7-naphthalenedicarboxylic acid. The dimer acid is a dicarboxylic acid produced by dimerization of an unsaturated fatty acid. Examples of the unsaturated fatty acid include unsaturated fatty acids having 18 carbon atoms such as linoleic acid, linolenic acid and oleic acid. The dimer acid can be nonhydrogenated or hydrogenated, but the latter is preferable in the light of reduced discoloration during polymerization. A dicarboxylic acid unit used as the other comonomer unit is preferably at least one selected from the group consisting of an isophthalic acid unit, a sebacic acid unit, a dimer acid unit and an adipic acid unit; more preferably at least one selected from the group consisting of an isophthalic acid unit, a sebacic acid and a dimer acid unit; further preferably an isophthalic acid unit.

Examples of a diol unit used as the other comonomer unit include aliphatic diols such as 1,5-pentanediol, neopentyl glycol, 1,6-hexanediol and methylpentanediol; alicyclic diols such as cyclohexanedimethanol, cyclooctanedimethanol, norbornenedimethanol and tricyclodecanedimethanol; and isosorbide derivatives. Methylpentanediol can be 3-methyl-1,5-pentanediol or 2-methyl-1,5-pentanediol. Cyclohexanedimethanol can be 1,2-cyclohexanedimethanol, 1,3-cyclohexanedimethanol and 1,4-cyclohexanedimethanol. A unit derived from a diol produced by adding one or more ethylene oxide molecules to each of two hydroxy groups in an aromatic diol can be used; for example, a unit derived from a bisphenol-A ethylene oxide adduct in which 1 to 8 ethylene oxide molecules are added to each of two phenolic hydroxy groups in bisphenol-A. Particularly, a diol unit used as the other comonomer unit is preferably at least one sleeted from the group consisting of a 3-methyl-1,5-pentanediol unit, a unit derived from a bisphenol-A ethylene oxide adduct, a 1,4-cyclohexanedimethanol unit, a cyclooctanedimethanol unit and an isosorbide unit; more preferably at least one selected from the group consisting of a 3-methyl-1,5-pentanediol unit, a unit derived from a bisphenol-A ethylene oxide adduct and a 1,4-cyclohexanedimethanol unit; further preferably a 3-methyl-1,5-pentanediol unit or a unit derived from a bisphenol-A ethylene oxide adduct.

Examples of a hydroxycarboxylic acid unit used as the other comonomer unit include those derived from an aliphatic hydroxycarboxylic acid or ester-forming derivative thereof such as 10-hydroxyoctadecane acid; an alicyclic hydroxycarboxylic acid or ester-forming derivative thereof such as hydroxymethylcyclohexanecarboxylic acid, hydroxymethylnorbornenecarboxylic acid and hydroxymethyltricyclodecanecarboxylic acid; or an aromatic hydroxycarboxylic acid or ester-forming derivative thereof such as hydroxybenzoic acid, hydroxytoluic acid, hydroxynaphthoic acid, 3-(hydroxyphenyl)propionic acid, hydroxyphenylacetic acid and 3-hydroxy-3-phenylpropionic acid.

A bifunctional compound unit used as the other comonomer unit is preferably at least one selected from the group consisting of an isophthalic acid unit, a 3-methyl-1,5-pentanediol unit, a sebacic acid unit, a unit derived from a bisphenol-A ethylene oxide adduct, a dimer acid unit, a 1,4-cyclohexanedimethanol unit, a cyclooctanedimethanol unit, an isosorbide unit and an adipic acid unit; more preferably at least one selected from the group consisting of an isophthalic acid unit, a 3-methyl-1,5-pentanediol unit, a sebacic acid unit, a unit derived from a bisphenol-A ethylene oxide adduct, a dimer acid unit and a 1,4-cyclohexanedimethanol unit; further preferably at least one selected from the group consisting of an isophthalic acid unit, a 3-methyl-1,5-pentanediol unit, a sebacic acid unit, a unit derived from a bisphenol-A ethylene oxide adduct and a dimer acid unit; particularly preferably an isophthalic acid unit. The bifunctional compound unit can be preferably a combination of a 3-methyl-1,5-pentanediol unit and a sebacic acid unit, where a molar ratio of these (3-methyl-1,5-pentanediol unit / sebacic acid unit) is preferably 1 to 30. The bifunctional compound unit can be also preferably a combination of an isophthalic acid units and a dimer acid unit, where a molar ratio of these (isophthalic acid unit / dimer acid unit) is preferably 1 to 30.

Examples of a polyfunctional compound unit having 3 or more carboxyl groups or hydroxy groups used as the other comonomer unit include those derived from trimellitic acid, pyromellitic acid, trimesic acid, trimethylolpropane and pentaerythritol and ester-forming derivatives thereof. These can increase melt tension with a small amount, and thus can be used for adjusting melt moldability. A content of the polyfunctional compound unit in polyester (A) is preferably 1 mol% or less, more preferably 0.5 mol% or less. A content of the polyfunctional compound unit of more than 1 mol% tends to cause undesirable gelation.

Examples of a monofunctional compound unit having one carboxyl or hydroxy group used as the other comonomer unit include those derived from benzoic acid, 2,4,6-trimethoxybenzoic acid, 2-naphthoic acid, stearic acid and stearyl alcohol. It acts as a sealing monomer unit; specifically, it is sometimes compounded for sealing a molecular-chain end group in a polyester to prevent excessive crosslinking and gel generation in the polyester. A content of the monofunctional compound unit in polyester (A) is preferably 1 mol% or less, more preferably 0.5 mol% or less. If a content of a monofunctional compound unit is more than 1 mol%, a polymerization rate during producing polyester (A) is reduced, leading to tendency to lower productivity.

Polyester (A) is preferably produced by melt-polycondensing terephthalic acid or an ester-forming derivative thereof, ethylene glycol and another comonomer having 5 or more carbon atoms, or melt-polycondensing terephthalic acid or an ester-forming derivative thereof, ethylene glycol and another comonomer having 5 or more carbon atoms followed by solid-phase polymerization.

There will be described melt-polycondensation of terephthalic acid or an ester-forming derivative thereof, ethylene glycol and another comonomer having 5 or more carbon atoms. First, terephthalic acid or an ester-forming derivative thereof and ethylene glycol are heated to initiate esterification or transesterification to obtain an oligomer. Here, another comonomer having 5 or more carbon atoms can be added before esterification or transesterification to obtain an oligomer. Alternatively, after producing the oligomer, another comonomer having 5 or more carbon atoms can be added, and the mixture can be used in melt-polycondensation reaction. The esterification or transesterification is preferably conducted under increased pressure of about 0.3 MPa or less of an absolute pressure or under atmospheric pressure at a temperature of 180 to 300 °C while distilling off water or an alcohol generated. A ratio of the starting materials in the esterification or transesterification is preferably selected such that a molar ratio (diol component/dicarboxylic acid component) is within the range of 1.1 to 2.5.

Melt-polycondensation after esterification or transesterification is preferably conducted by adding, if necessary, the above starting materials, a polycondensation catalyst and an anticoloring agent to the polyester oligomer obtained, which is then heated at a temperature of 200 to 300 °C under a reduced pressure of 1 kPa or less to obtain a polyester having a desired viscosity. The melt-polycondensation reaction can be conducted in, for example, a batch type polycondensation tank apparatus, a continuous polycondensation apparatus consisting of a horizontal biaxial rotation type reactor, or the like.

When a polycondensation catalyst is used in the above melt-polycondensation reaction, it is preferably a compound containing germanium, antimony or titanium element. Examples of an antimony-containing compound include antimony trioxide, antimony chloride and antimony acetate. Examples of a germanium-containing compound include germanium dioxide, germanium tetrachloride and germanium tetraethoxide. Examples of a titanium-containing compound include tetraisopropyl titanate and tetrabutyl titanate. When a polycondensation catalyst is used, its amount is preferably within the range of 0.002 to 0.8 % by mass based on the mass of a dicarboxylic acid component.

When an anticoloring agent is used in the melt-polycondensation reaction, it can be a phosphorous compound such as phosphorous acid, phosphoric acid, trimethyl phosphite, triphenyl phosphite, tridecyl phosphite, trimethyl phosphate, tridecyl phosphate and triphenyl phosphate. These phosphorous compounds can be used alone or in combination of two or more. When an anti-coloring agent such as the above phosphorous compounds is used, its amount is preferably within the range of 0.001 to 0.5 % by mass based on the mass of a dicarboxylic acid component. Furthermore, for preventing discoloration due to thermal decomposition of polyester, a cobalt compound such as cobalt acetate can be added by 0.001 to 0.5 % by mass based on the mass of the dicarboxylic acid component.

The polyester thus obtained can be used for a film production or can be further subjected to solid phase polymerization as described below. Solid phase polymerization can provide a polyester with a higher polymerization degree. An inherent viscosity of a polyester used for solid phase polymerization is preferably within the range of 0.4 to 0.85 dl/g. A polyester obtained by melt polycondensation is extruded into a shape such as a strand and a sheet, cooled, and cut by a strand cutter or sheet cutter to produce intermediate pellets with a shape of a cylinder, a cylindroid, a disc, a dice or the like. The cooling described above after extrusion can be conducted by, for example, water-cooling using a water bath, cooling using a cooling drum or air cooling.

The intermediate pellets thus obtained are subjected to solid polymerization. It is preferable that before the solid polymerization, they are preliminarily crystallized by heating. Thus, conglutination of the pellets during solid phase polymerization can be prevented. A crystallization temperature is suitably 100 to 180 °C. Crystallization can be initiated by an appropriate method such as crystallization in a vacuum tumbler and crystallization by heating in an air-circulation type heater. A time required for crystallization is generally about 30 min to 24 hours.

A temperature during the solid phase polymerization is suitably 170 to 250 °C, and a time for the solid phase polymerization is generally about 5 to 70 hours. Furthermore, the catalyst used in the melt polycondensation can coexist during the solid phase polymerization. The solid phase polymerization is conducted preferably under reduced pressure or under inert gas atmosphere such as nitrogen gas. For avoiding conglutination between pellets, the solid phase polymerization is preferably conducted while moving the pellets by an appropriate method such as rolling and a gas fluidized bed method. A pressure in the solid phase polymerization under reduced pressure is suitably 1 kPa or less. An inherent viscosity of a polyester after the solid phase polymerization is preferably within the range of 0.8 to 1.3 dL/g.

A layer made of polyester (A) in a sealant film of the present invention can contain additives as long as it does not inhibit the effects of the the present invention; for example, a coloring agent such as a dye and a pigment; a stabilizer such as an ultraviolet absorber; an antistatic agent; a flame retardant; a flame retardant aid; a lubricant; a plasticizer; an inorganic filler; an inorganic layered compound; and an organified inorganic layered compound. These can be added to the polyester during film formation. A content of these additives in the sealant film is preferably 10 % by mass or less, more preferably 2 % by mass or less.

A sealant film of the present invention can be monolayered or multilayered. The sealant film is preferably a single-layer film. A thickness of the single-layer film is preferably 20 to 100 $\mu$m. The thickness is more preferably 30 $\mu$m or more. Meanwhile, the thickness is more preferably 80 $\mu$m or less.

The sealant film is preferably a multi-layer film comprising a layer made of polyester (A) and a layer made of polyester (B); polyester (B) comprises 45 to 50 mol% of terephthalic acid units, 42.5 to 49.5 mol% of ethylene glycol units, 0.5 to 2.5 mol% of diethylene glycol units and 0 to 5 mol% of other comonomer units having 5 or more carbon atoms; the layer made of polyester (A) is disposed in at least one of the surfaces; and formula (1) is satisfied;

$$a - b \geq 1 \qquad (1)$$

wherein

a: a content of the other comonomer units in polyester (A) (mol%)
b: a content of the other comonomer units in polyester (B) (mol%).

By forming a layer made of polyester (B) having a content of other comonomer units having 5 or more carbon atoms less than polyester (A), a sealant film exhibiting more excellent mechanical properties can be obtained. A layer made of polyester (B) exhibits high interlayer adhesion to a layer made of polyester (A).

In the light of further improving mechanical properties of a sealant film obtained, a content of other comonomer units in polyester (B) is 5 mol% or less, preferably 3.9 mol% or less, more preferably 2.9 mol% or less, further preferably 1.9 mol% or less. From the same point of view, a content of terephthalic acid units in polyester (B) is 45 mol% or more, preferably 46.1 mol% or more, more preferably 47.1 mol% or more, further preferably 48.1 mol% or more. From the same point of view, a content of ethylene glycol units in polyester (B) is 42.5 mol% or more, preferably 43.6 mol% or more, more preferably 44.6 mol% or more, further preferably 45.6 mol% or more.

The multi-layer film meets preferably formula (1'), more preferably formula (1"). Polyester (B) is the same as polyester (A), except that a content of the other comonomer units having 5 or more carbon atoms is smaller.

$$a-b \geq 2 \qquad (1')$$

$$a-b \geq 3 \qquad (1")$$

wherein a and b are as described in formula (1).

A thickness of a layer made of polyester (A) in the multi-layer film is preferably 2 to 200 $\mu$m. The thickness is more preferably 3 $\mu$m or more. Meanwhile, the thickness is more preferably 80 $\mu$m or less, further preferably 20 $\mu$m or less. A thickness of a layer made of polyester (B) is preferably 5 to 100 $\mu$m. The thickness is more preferably 10 $\mu$m or

more. Meanwhile, the thickness is more preferably 80 $\mu$m or less, further preferably 60 $\mu$m or less. With the layer made of polyester (A) and the layer made of polyester (B) having thicknesses within the above respective ranges, a multi-layer film exhibiting excellent balance between mechanical properties and heat sealability can be obtained. The total thickness of the multi-layer film is preferably 20 to 500 $\mu$m. The total thickness is more preferably 30 $\mu$m or more. Meanwhile, the total thickness is more preferably 300 $\mu$m or less, further preferably 150 $\mu$m or less, particularly preferably 80 $\mu$m or less.

Examples of a layer structure of the multi-layer film include A/B, A/B/A, A/B/A/B, A/B/A/B/A, preferably A/B/A, wherein "A" is a layer made of polyester (A) and "B" is a layer made of polyester (B).

A film formation process employed for producing a sealant film of the present invention can be a method where polyester (A) is extrusion-molded by a T-die method, inflation method or the like. An inherent viscosity of polyester (A) used for extrusion molding is preferably within the range of 0.6 to 1.3 dl/g in the T-die method and within the range of 0.8 to 1.3 dl/g in the inflation method. Examples of an extruder used for extrusion molding of polyester (A) include a single screw extruder, a twin screw extruder, a vent extruder and a tandem extruder. A temperature polyester (A) during extrusion molding is preferably within the range of [melting point of the polyester +10 °C] to [melting point of the polyester + 80 °C]. It is preferable that molten polyester (A) is extruded into a film, which is then rapidly solidified by a cooling drum to provide an unstretched film. Thus, crystallization of polyester (A) in the film obtained can be prevented. A temperature of the above cooling drum is preferably within the range of [glass transition temperature of the polyester - 30 °C] to [glass transition temperature of the polyester + 10 °C]. Scraps such as trims generated during film production can be recovered and recycled.

A film-forming method employed in a method for producing a multi-layer film having a layer made of polyester (A) and a layer made of polyester (B) is, for example, co-extrusion molding by a T-die or inflation method. Inherent viscosities of polyester (A) and polyester (B) used and the co-extrusion conditions are as described for the above extrusion molding of polyester (A). Scraps such as trims generated during multi-layer film production can be recovered and recycled. A content of a recovered material in a layer made of polyester (A) or a layer made of polyester (B) is preferably 50 % by mass or less, more preferably 30 % by mass or less, further preferably 10 % by mass or less, based on a total mass of the resin. The recovered material is preferably contained in the layer made of polyester (B).

Examples of a method for stretching an unstretched film thus obtained include tenter stretching, tubular stretching and roll stretching. A temperature during stretching is preferably within the range of (glass transition temperature of the polyester + 5 °C) to (glass transition temperature of the polyester + 40 °C).

A method for producing a sealant film of the present invention preferably comprises extrusion-molding polyester (A) to form a single-layer film or co-extrusion-molding polyester (A) and polyester (B) to form a multi-layer film and then uniaxially stretching the film to provide a stretched film. A sealant film obtained by such a method exhibits good handling properties. Here, a uniaxial stretching ratio is preferably 1.1 to 3.5. If a uniaxial stretching ratio is less than 1.1, tensile elongation may be insufficient. A uniaxial stretching ratio is more preferably 1.5 or more. Meanwhile, if a uniaxial stretching ratio is more than 3.5, tensile elongation or heat sealability may be insufficient. A uniaxial stretching ratio is more preferably 2.5 or less.

A method for producing a sealant of the present invention also preferably comprises extrusion-molding polyester (A) to form a single-layer film or co-extrusion-molding polyester (A) and polyester (B) to form a multi-layer film and then biaxially stretching the film to provide a stretched film. The biaxial stretching can be simultaneous biaxial stretching or sequential biaxial stretching. An area stretching factor in the biaxial stretching is preferably 1.1 to 9.0. If an area stretching factor is less than 1.1, tensile elongation may be insufficient. An area stretching factor is more preferably 1.5 or more. Meanwhile, if an area stretching factor is more than 9.0, tensile elongation or heat sealability may be insufficient. An area stretching factor is more preferably 7 or less, further preferably 5 or less.

A stretched film obtained can be further "heat-treated (heat fixation). If a thermal shrinkage ratio of a stretched film is too high, the film may be hard to be handed, depending on the use. In such a case, the stretched film can be heated at a temperature higher than a stretching temperature to reduce a thermal shrinkage ratio. Here, a heat-treatment temperature is preferably 120 °C or lower.

A sealant film of the present invention must be a stretched film having a shrinkage ratio of 6 % or more in a maximum shrinkage direction when it is allowed to stand at 125 °C for 20 sec. In general, a shrinkage ratio described above increases as the film is stretched. Herein, the film must be stretched such that the above shrinkage ratio becomes 6 % or more. By stretching such that the shrinkage ratio becomes 6 % or more, mechanical properties, particularly tensile elongation can be improved while maintaining excellent heat sealability. The shrinkage ratio is suitably 10 % or more, more suitably 15 % or more. In the light of a sealant film having particularly high mechanical properties, the shrinkage ratio is suitably 30 % or more. Meanwhile, in the light of handling properties of a sealant film, the shrinkage ratio is suitably 58 % or less, more suitably 55 % or less. In the light of providing a sealant film having particularly excellent handling properties, the thermal shrinkage ratio is suitably 50 % or less, more suitably 48 % or less. The shrinkage ratio is determined as described below. A sealant film is cut into 80 mm × 80 mm square pieces, and a flow direction and a stretching direction are marked on the film. The sealant film is heat-treated by allowing it to stand at 125°C for 20 sec. Here, a shrinkage ratio in a direction in which a shrinkage ratio of the film is highest is defined as a shrinkage ratio in a maximum shrinkage direction. Since in general a stretching ratio in a flow direction during film forming (MD) is highest, MD is a maximum shrinkage direction. However, for example, in the case that a film is biaxially stretched such that a stretching ratio in a horizontal direction (TD) is highest, TD may be a maximum shrinkage direction. Furthermore, when MD or a stretching direction of a sealant film is unknown, first a sealant film cut into a disk can be heated for determining a maximum shrinkage direction, and then a shrinkage ratio can be determined by the above method. When the sealant film is a multi-layer film described above, a shrinkage ratio of the multi-layer film must be within the above range.

In the light of further improvement of handling properties as a sealant film, it is preferable that when a sealant film of the present invention is allowed to stand at 125°C for 20 sec, a shrinkage ratio in a direction perpendicular to a maximum shrinkage direction is less than 10 %, more preferably 5 % or less.

A crystallinity degree of a sealant film of the present invention must be less than 16 %. Here, a crystallinity degree of a sealant film is a crystallinity degree of a polyester in a stretched film, which is determined by a method as described later in Examples. When the sealant film is the multi-layer film, a value determined for the multi-layer film by the method is employed. If the crystallinity degree is 16% or more, tensile elongation and heat sealability are insufficient. The crystallinity degree is preferably 10 % or less. Meanwhile, in the light of further improvement of tensile elongation, the crystallinity degree is suitably 1 % or more. Furthermore, an inherent viscosity of a polyester in the sealant film of the present invention is preferably within the range of 0.5 to 1.3 dl/g.

Herein, it is preferable that an elongation at break as determined by a tensile test under the conditions of a temperature of 23 °C, a relative humidity of 65 % and a tension rate of 50 mm/min is 150 % or more. Here, it is sufficient that an elongation at break in at least one direction of the sealant film is 150 % or more. A sealant film having such an elongation at break is suitably used as an innermost layer of various packaging materials. The elongation at break is more preferably 200 % or more, further preferably 250 % or more.

A sealant film of the present invention exhibits excellent mechanical properties, particularly tensile elongation, and excellent heat sealability and non-adsorptivity. Therefore, the sealant film can be suitably used as an innermost layer of a packaging material for foods, beverage, medicals, cosmetics, medical devices and the like. When the sealant film is used as an innermost layer in a multi-layer packaging material, another layer laminated with the sealant film can be a paper, a metal plate or the like.

A sealing tape produced by slitting the sealant film is suitably used. Here, preferably, a roll of the sealant film is used for slitting. A width of the sealing tape is preferably 2 to 100 mm. Among others, a strip tape for a packaging container made of the sealing tape is a suitable embodiment of the sealing tape. A well-known method for producing a packed material comprises vertically heat sealing one end and the other end of a paper laminate as a webbed packaging material by the use of a strip tape (sealing tape) in a longitudinal direction, to form a tubular material; filling the tubular packaging material with a filling such as drinking water; then, horizontally heat sealing the tubular packaging material in a transverse direction to form a pillow-like primary shape material; cutting the horizontally heat sealed part; and folding the material into a brick. A strip tape of the present invention is also suitably used in production of such a packed material.

EXAMPLES

There will be further detailed the present invention with reference to Examples, but the present invention is not limited to Examples in any manner.

(1) Inherent viscosity (IV)

An inherent viscosity of a polyester was measured at a temperature of 30 °C, using an equimass mixture of phenol and 1,1,2,2-tetrachloroethane as a solvent.

(2) glass transition temperature (Tg)

A glass transition temperature (Tg) of a polyester was measured using a differential scanning calorimeter (TA Instruments, Type TA Q2000). The glass transition temperature (Tg) was calculated from the data obtained while the polyester was heated to 280 °C at a programming rate of 10 °C/min, then rapidly cooled to 30 °C at a programming rate of -50 °C/min, and again heated at a programming rate of 10 °C/min.

(3) Crystallinity degree ($\chi$)

A crystallinity degree ($\chi$) of a polyester in a film was measured using the differential scanning calorimeter described above. A fusion enthalpy $\Delta Hm$ (J/g) and a crystallization enthalpy $\Delta Hc$ (J/g) were measured by heating the polyester film at a programming rate of 10 °C/min. From $\Delta Hm$ and $\Delta Hc$ thus measured, and a perfect crystal fusion heat of unmodified polyethylene terephthalate [140.1 (J/g)], a crystallinity degree $\chi$ (%) was determined from the following

equation.

$$\chi\ (\%) = [(\Delta Hm - \Delta Hc)\ /\ 140.1] \times 100$$

(4) Thermal shrinkage ratio

A sealant film with a thickness of 40 to 60 $\mu$m was cut into a 80 mmx80 mm square and a flow direction (MD) during film forming and a stretching direction were marked on the film. The film was immersed in a constant-temperature unit maintained at 125 °C for 20 sec, and then a shrinkage ratio in a maximum shrinkage direction was determined.

(5) Tensile test

A sealant film with a thickness of 40 to 60 $\mu$m was cut into a strip with a length of 100 mm and a width of 15 mm such that a flow direction (MD) during film forming is a longitudinal direction, to give a test piece. Using an autograph (Shimadzu Corporation), tensile test was conducted at a temperature of 23 °C, a relative humidity of 65% and a tension rate of 50 mm/min, to determine a tensile strength, a Young's modulus and a tensile elongation (elongation at break) in a flow direction (MD) in the sealant film.

(6) Heat seal test

Two sealant films with a thickness of 40 to 60 $\mu$m as strips with a width of 15 mm were laminated. Then, the laminate was heat sealed under a temperature condition of 70 to 150 °C (interval: 10°C) at 0.2 MPa for 2 sec using a YSS type heat sealer (Yasuda Seiki Seisakusho, Ltd.), to prepare samples heat sealed at different temperatures. Using an autograph (Shimadzu Corporation), each sample was subjected to peeling test at a tension rate of 50 mm/min, to determine a peel strength required for delaminating two films (180° peeling). A heat temperature at which a peel strength is 5.0 N/15 mm or more is defined as a heat sealable temperature. When a peel strength of 5.0 N/15 mm or more was not achieved even by heat sealing at 150 °C, the laminate was not judged to be heat sealable.

(7) Sealability test of a strip tape

A sealant film was cut into a tape with a width of 10 mm, to prepare strip tape 2. A cup was produced using a paper substrate 2 having a layer formed by extrusion coating of the strip tape 2 and polyethylene terephthalate (PET) (Kurapet KS710B-8S (Kuraray Co., Ltd.)) to a thickness of 30 $\mu$m on one side. FIG. 1 shows a sealing part of the cup. The paper substrate 1 was rounded to form a cylinder such that the PET layer is inside, and they were piled such that an overlapped portion had a structure of paperboard, PET, paperboard and PET from the outside with a width of 5 mm. After the middle of the strip tape 2 was disposed in the stepped part inside of the cylinder, heat sealing was conducted at 130 °C using a YSS type heat sealer (Yasuda Seiki Seisakusho, Ltd.). Next, the bottom of the cylinder was heat sealed at 140 °C, and then the cup was filled with water. Sealability of the strip tape was accepted when water did not leak or rejected when water leaked.

Example 1

(1) Melt polycondensation

A slurry consisting of 85.0 parts by mass of terephthalic acid (TA), 15.0 parts by mass of isophthalic acid (IPA) and 44.8 parts by mass of ethylene glycol (EG) was prepared, and heated at 250°C under increased pressure (gauge pressure: 0.25 MPa) for esterification to produce an oligomer. The oligomer was placed in a polycondensation tank, to which were then added 0.012 parts by mass of germanium dioxide ($GeO_2$) and 0.012 parts by mass of phosphorous acid. The mixture was melt-polycondensed at 0.1 kPa and 280 °C for 90 min, to give a copolymerized polyester with an inherent viscosity of 0.7 dL/g. The copolymerized polyester obtained was extruded as a strand from a nozzle, water-cooled, and cut into cylinders (diameter: about 2.5 mm, length: about 2.5 mm) to give pellets of the copolymerized polyester (melt-polymerization pellets).

(2) Pre-crystallization of melt-polymerization pellets

The melt-polymerization pellets obtained as described above were placed in a tumbling vacuum solid-phase polymerization device and pre-crystallized at 0.1 kPa and 120 °C for 10 hours.

(3) Solid phase polymerization

After the above pre-crystallization, the pellets were heated at 0.1 kPa and 185 °C for 20 hours for solid phase polymerization, to give solid phase polymerization pellets. An inherent viscosity of the copolymerized polyester obtained was 0.9 dL/g. A ratio of monomer compositions constituting the polyester obtained was determined by $^1$H-NMR spectrometry (device: JEOL Ltd., "JNM-GX-500 type", solvent: deuterated trifluoroacetic acid), to be terephthalic acid units:isophthalic acid units:ethylene glycol units:diethylene glycol units = 42.5:7.5:48.75:1.25 (molar ratio). A glass transition temperature (Tg) of the copolymerized polyester obtained was 75 °C. A ratio of the monomer components constituting the polyester, and a glass transition temperature were unchanged between before and after the solid phase polymerization.

(4) Film formation

The solid phase polymerization pellets obtained were dried in a dryer at 120 °C overnight, uniaxially kneaded (cylinder temperature :270 to 290 °C) and extruded from a T-die over a cooling roll at 80 °C, to give an unstretched film with a thickness of 100 μm and a width of 300 mm. The unstretched film obtained was cut into a 100 mm × 100 mm square, which was then, while being fixed by four sides by a chuck, subjected to pantograph uniaxial stretching [stretching ratio: 2, stretching direction: flow direction (MD) during film formation] at 80°C. The stretched film obtained was subjected to measurement of an inherent viscosity, measurement of a crystallinity degree, measurement of a thermal shrinkage ratio, tensile test, heat seal test and sealability test for the strip tape. The results are shown in Table 1. A maximum shrinkage direction in measurement of a thermal shrinkage ratio was a stretching direction (a flow direction during film formation). Table 1 also shows a thermal shrinkage ratio in a horizontal direction (TD).

Example 2

Solid phase polymerization pellets were produced as described in Example 1, except that a slurry consisting of 95.0 parts by mass of terephthalic acid, 5.0 parts by mass of isophthalic acid and 44.8 parts by mass of ethylene glycol was used. An inherent viscosity of the copolymerized polyester thus obtained was 0.9 dL/g. A ratio of monomer components constituting the copolymerized polyester was determined as described in Example 1, and terephthalic acid units:isophthalic acid units:ethylene glycol units:diethylene glycol units was 47.5:2.5:48.75:1.25 (molar ratio). A glass transition temperature (Tg) of the copolymerized polyester obtained was 77 °C. A stretched film was produced and evaluated as described in Example 1, except the copolymerized polyester obtained was used. The results are shown in Table 1. A maximum shrinkage direction in measurement of a thermal shrinkage ratio was a stretching direction (a flow direction during film formation).

Example 3

Melt-polymerization pellets were produced as described in Example 1, except that a slurry consisting of 75.0 parts by mass of terephthalic acid, 25.0 parts by mass of isophthalic acid and 44.8 parts by mass of ethylene glycol was used, and a polymerization time was 150 min. An inherent viscosity of the copolymerized polyester thus obtained was 0.9 dL/g. A ratio of monomer components constituting the copolymerized polyester was determined as described in Example 1, and terephthalic acid units:isophthalic acid units:ethylene glycol units:diethylene glycol units was 37.5:12.5:48.75:1.25 (molar ratio). A glass transition temperature (Tg) of the copolymerized polyester obtained was 71 °C. A stretched film was produced and evaluated as described in Example 1, except the copolymerized polyester obtained was used, a resin-drying temperature was 65 °C, and the drying was conducted under vacuum. The results are shown in Table 1. A maximum shrinkage direction in measurement of a thermal shrinkage ratio was a stretching direction (a flow direction during film formation).

Example 4

Melt-polymerization pellets were produced as described in Example 1. An inherent viscosity of the copolymerized polyester thus obtained was 0.7 dL/g. A ratio of monomer components constituting the copolymerized polyester was determined as described in Example 1, and terephthalic acid units:isophthalic acid units:ethylene glycol units:diethylene glycol units was 42.5:7.5:48.75:1.25 (molar ratio). A glass transition temperature (Tg) of the copolymerized polyester obtained was 75 °C. A stretched film was produced and evaluated as described in Example 1, except the copolymerized polyester obtained was used, and a resin-drying temperature was 70 °C. The results are shown in Table 1. A maximum shrinkage direction in measurement of a thermal shrinkage ratio was a stretching direction (a flow direction during film formation).

Example 5

A stretched film was produced and evaluated as described in Example 1, except that a stretching temperature was 110 °C. The results are shown in Table 1. A maximum shrinkage direction in measurement of a thermal shrinkage ratio was a stretching direction (a flow direction during film formation).

Example 6

A stretched film was produced and evaluated as described in Example 1, except that stretching was pantograph biaxial stretching [stretching temperature: 80 °C, stretching ratio: flow direction (MD) 2, horizontal direction (TD) 2]. The results are shown in Table 1. A maximum shrinkage direction in measurement of a thermal shrinkage ratio was a flow direction during film formation.

Example 7

A stretched film was produced and evaluated as described in Example 1, except that a film was stretched and subsequently heated at 110 °C for 1 min. The results are shown in Table 1. A maximum shrinkage direction in measurement of a thermal shrinkage ratio was a stretching direction (a flow direction during film formation).

Example 8

A slurry consisting of 98.70 parts by mass of terephthalic acid, 1.59 parts by mass of sebacic acid, 11.85 parts by mass of 3-methyl-1,5-pentanediol (MPD) and 44.83 parts by mass of ethylene glycol was prepared. To the slurry was added 0.035 parts by mass of tetraisopropoxy titanium, and the mixture was subjected to esterification under increased pressure (gauge pressure: 0.25 MPa) at 250 °C until an esterification rate became 95 %, to give an oligomer. Next, this oligomer was melt-polycondensed at 50 Pa and 280 °C for 90 min, to give a copolymerized polyester with an inherent viscosity of 0.7 dL/g. A ratio of monomer components constituting the copolymerized polyester was determined as described in Example 1; terephthalic acid units: 49.5 mol%, sebacic acid units: 0.5 mol%, 3-methyl-1,5-pentanediol units: 7.5 mol%, ethylene glycol units: 41.5 mol%, diethylene glycol units: 1.0 mol% (molar ratio). A glass transition temperature (Tg) of the copolymerized polyester obtained was 64 °C. A stretched film was produced and evaluated as described in Example 1, except that the copolymerized polyester obtained was used, a stretching temperature was 70 °C, a resin-drying temperature was 60 °C, drying was conducted under vacuum, and a cylinder temperature during extrusion film formation was 240 to 260 °C. The results are shown in Table 1. A maximum shrinkage direction in measurement of a thermal shrinkage ratio was a stretching direction (a flow direction during film formation).

Example 9

A stretched film was produced and evaluated as described in Example 8, except that stretching ratio was 3. The results are shown in Table 1. A maximum shrinkage direction in measurement of a thermal shrinkage ratio was a stretching direction (a flow direction during film formation).

Example 10

Solid phase polymerization pellets were produced as described in Example 1, except that a slurry consisting of 72.9 parts by mass of terephthalic acid, 10.7 parts by mass of isophthalic acid, 16.4 parts by mass of hydrogenated dimer acid and 38.4 parts by mass of ethylene glycol was prepared and a solid phase polymerization time was 30 hours. An inherent viscosity of the copolymerized polyester thus obtained was 1.0 dL/g. A ratio of monomer components constituting the copolymerized polyester was determined as described in Example 1, and terephthalic acid units:isophthalic acid units:hydrogenated dimer acid units:ethylene glycol units:diethylene glycol units was 43:6:1:48.75:1.25 (molar ratio). A glass transition temperature (Tg) of the polyester obtained was 48 °C. A stretched film was produced and evaluated as described in Example 1, except that the copolymerized polyester obtained was used and a stretching temperature was 55 °C. The results are shown in Table 1. A maximum shrinkage direction in measurement of a thermal shrinkage ratio was a stretching direction (a flow direction during film formation).

Example 11

Solid phase polymerization pellets were produced as described in Example 1, except that a slurry consisting of 100 parts by mass of terephthalic acid, 42.6 parts by mass of ethylene glycol and 9.5 parts by mass of bisphenol-A ethylene oxide adduct (EOBPA) was prepared, a solid phase polymerization temperature was 200 °C, and a solid phase polymerization time was 40 hours. An inherent viscosity of the copolymerized polyester thus obtained was 1.2 dL/g. A ratio of monomer components constituting the copolymerized polyester was determined as described in Example 1, and terephthalic acid units:ethylene glycol units:units derived from a bisphenol-A ethylene oxide adduct:diethylene glycol units was 50:46.25:2.5:1.25 (molar ratio). A glass transition temperature (Tg) of the polyester obtained was 81 °C. A stretched film was produced and evaluated as described in Example 1, except that the copolymerized polyester obtained was used and a stretching temperature was 85 °C. The results are shown in Table 1. A maximum shrinkage direction in measurement of a thermal shrinkage ratio was a stretching direction (a flow direction during film formation).

Example 12

Melt-polymerization pellets were produced as described in Example 1, except that a slurry consisting of 100 parts by mass of terephthalic acid, 34.9 parts by mass of 1,4-cyclohexanedimethanol (CHDM) and 30.0 parts by mass of ethylene glycol was used, and solid phase polymerization was omitted. An inherent viscosity of the copolymerized polyester thus obtained was 0.75 dL/g. A ratio of monomer components constituting the copolymerized polyester was determined as described in Example, and terephthalic acid units:CHDM units:ethylene glycol units:diethylene glycol units was 50:16.5:32.0:1.5 (molar ratio). A glass transition temperature (Tg) of the polyester obtained was 79 °C. A stretched film was produced and evaluated as described in Example 1, except that the copolymerized polyester obtained was used, a cylinder temperature during extrusion was 240 to 260 °C, and a stretching temperature was 85 °C. The results are shown in Table 1. A maximum shrinkage direction in measurement of a thermal shrinkage ratio was a stretching direction (a flow direction during film formation).

Example 13

A stretched film was produced and evaluated as described in Example 1, except that a method for forming a stretched film was roll stretching instead of uniaxial stretching using a pantograph (a preheat roll temperature: 90 °C, a stretching roll temperature: 90 °C, a heat fixation roll temperature: 90 °C, a stretching ratio: 2). The results are shown in Table 2. A maximum shrinkage direction in measurement of a thermal shrinkage ratio was a stretching direction (a flow direction during film formation).

Example 14

A stretched film was produced and evaluated as described in Example 13, except that a heat fixation roll temperature was 110 °C. The results are shown in Table 2. A maximum shrinkage direction in measurement of a thermal shrinkage ratio was a stretching direction (a flow direction during film formation).

Example 15

Solid phase polymerization pellets were produced as described in Example 1, except that a slurry consisting of 84.9 parts by mass of terephthalic acid, 15.0 parts by mass of isophthalic acid, 0.1 parts by mass of trimellitic anhydride (TMA) and 44.8 parts by mass of ethylene glycol was used. An inherent viscosity of the copolymerized polyester thus obtained was 0.9 dL/g. A ratio of monomer components constituting the copolymerized polyester was determined as described in Example 1, and terephthalic acid units:isophthalic acid units:trimellitic acid units:ethylene glycol units:diethylene glycol units was 42.45:7.5:0.05:48.75:1.25 (molar ratio). A glass transition temperature (Tg) of the copolymerized polyester obtained was 75 °C. A stretched film was produced and evaluated as described in Example 13. The results are shown in Table 2. A maximum shrinkage direction in measurement of a thermal shrinkage ratio was a stretching direction (a flow direction during film formation).

Comparative Example 1

A stretched film was produced and evaluated as described in Example 7, except that a heat-treatment temperature was 130 °C. The results are shown in Table 1. A maximum shrinkage direction in measurement of a thermal shrinkage ratio was a stretching direction (a flow direction during film formation).

Comparative Example 2

An unstretched film was produced as described in Example 3. The unstretched film obtained was evaluated as described in Example 1. The results are shown in Table 1.

Comparative Example 3

An unstretched film was produced as described in Example 8. The unstretched film obtained was evaluated as described in Example 1. The results are shown in Table 1.

Comparative Example 4

A stretched film was produced and evaluated as described in Example 8, except that stretching ratio was 4. The results are shown in Table 1. A maximum shrinkage direction in measurement of a thermal shrinkage ratio was a stretching direction (a flow direction during film formation).

Comparative Example 5

Melt-polymerization pellets were produced as described in Example 1, except that a slurry consisting of 100 parts by mass of terephthalic acid and 44.8 parts by mass of ethylene glycol was used. An inherent viscosity of the polyester thus obtained was 0.7 dL/g. A ratio of monomer components constituting the polyester was determined as described in Example 1, and terephthalic acid units:ethylene glycol units:diethylene glycol units was 50:48.75:1.25 (molar ratio). A glass transition temperature (Tg) of the polyester obtained was 80 °C. An unstretched film was produced as described in Example 1, except that the polyester obtained was used and a resin drying temperature was 70 °C, and then the unstretched film was evaluated. The results are shown in Table 1. A maximum shrinkage direction in measurement of a thermal shrinkage ratio was a flow direction during film formation.

Comparative Example 6

An unstretched film was produced as described in Comparative Example 5. A stretched film was produced and evaluated as described in Example 1, except that the unstretched film was used, and a stretching temperature was 85 °C. The results are shown in Table 1. A maximum shrinkage direction in measurement of a thermal shrinkage ratio was a stretching direction (a flow direction during film formation).

Comparative Example 7

An unstretched film was produced as described in Comparative Example 5. A stretched film was produced and evaluated as described in Example 1, except that the unstretched film was used, stretching was pantograph biaxial stretching [stretching temperature: 120 °C, stretching ratio: 5 in a flow direction (MD), 5 in a horizontal direction (TD)], and after stretching, the film was further heated at 200°C for 2 min. The results are shown in Table 1. A maximum shrinkage direction in measurement of a thermal shrinkage ratio was a flow direction during film formation.

[Table 1]

| | Polyester | | | | Production | | | | Evaluation of sealant film | | | | | | | | Evaluation of sealability of strip tape |
|---|---|---|---|---|---|---|---|---|---|---|---|---|---|---|---|---|---|
| | Other monomer units | | IV (dL/g) | Tg (°C) | Stretching temperature (°C) | Stretching ratio[1] | Heat fixation | Film thickness (μm) | IV (dL/g) | X (%) | Thermal shrinkage ratio (%) | | Young's modulus (GPa) | Tensile strength (MPa) | Tensile elongation (%) | HS able temperature (°C) | |
| | Type | Content (mol%) | | | | | | | | | MD | TD | | | | | |
| Example 1 | IPA | 7.5 | 0.9 | 75 | 80 | 2 × 1 | - | 50 | 0.8 | 3 | 46 | 1 | 2.1 | 65 | >300 | 100 | Accepted |
| Example 2 | IPA | 2.5 | 0.9 | 77 | 80 | 2 × 1 | - | 50 | 0.8 | 6 | 46 | 2 | 2.0 | 63 | >300 | 110 | Accepted |
| Example 3 | IPA | 12.5 | 0.9 | 71 | 80 | 2 × 1 | - | 50 | 0.8 | 4 | 47 | 2 | 2.2 | 75 | >300 | 100 | Accepted |
| Example 4 | IPA | 7.5 | 0.7 | 75 | 80 | 2 × 1 | - | 50 | 0.6 | 6 | 45 | 2 | 2.2 | 66 | >300 | 100 | Accepted |
| Example 5 | IPA | 7.5 | 0.9 | 75 | 110 | 2 × 1 | - | 50 | 0.8 | 3 | 32 | 2 | 1.8 | 55 | >300 | 110 | Accepted |
| Example 6 | IPA | 7.5 | 0.9 | 75 | 80 | 2 × 2 | - | 50 | 0.8 | 5 | 40 | 38 | 2.1 | 58 | 170 | 130 | Accepted |
| Example 7 | IPA | 7.5 | 0.9 | 75 | 80 | 2 × 1 | 110 °C, 1 min | 50 | 0.8 | 4 | 32 | 3 | 1.6 | 47 | >300 | 110 | Accepted |
| Example 8 | Sebacic acid MPD | 0.5 7.5 | 0.7 | 64 | 70 | 2 × 1 | - | 50 | 0.6 | 5 | 47 | 1 | 1.9 | 56 | >300 | 90 | Accepted |
| Example 9 | Sebacic acid MPD | 0.5 7.5 | 0.7 | 64 | 70 | 3 × 1 | - | 50 | 0.6 | 15 | 57 | 2 | 2.5 | 71 | 190 | 120 | Accepted |
| Example 10 | IPA hydrogenated dimer acid | 6 1 | 1.0 | 48 | 55 | 2 × 1 | - | 50 | 0.9 | 4 | 48 | 1 | 1.8 | 58 | >300 | 110 | Accepted |
| Example 11 | EOBPA | 2.5 | 1.2 | 81 | 85 | 2 × 1 | - | 50 | 1.1 | 5 | 46 | 2 | 2.1 | 63 | >300 | 110 | Accepted |
| Example 12 | CHDM | 16.5 | 0.75 | 79 | 85 | 2 × 1 | - | 50 | 0.7 | 2 | 46 | 3 | 1.7 | 55 | >300 | 120 | Accepted |

| | Other monomer units | | MD | IV (dL/g) | Tg (°C) | Stretching temperature (°C) | Stretching ratio[1] | Heat fixation | Film thickness (μm) | IV (dL/g) | X (%) | Thermal shrinkage ratio (%) | | Young's modulus (GTa) | Tensile strength (MPa) | Tensile elongation (%) | HS able temperature (°C) | |
|---|---|---|---|---|---|---|---|---|---|---|---|---|---|---|---|---|---|---|
| Type | Content (mol %) | | | | | | | | | | | TD | | | | | | |
| Comparative Example 1 | IPA | 7.5 | | 0.9 | 75 | 80 | 2 × 1 | 130°C, 1 min | 50 | 0.8 | 4 | 5 | 2 | 1.6 | 47 | 4 | 110 | Accepted |
| Comparative example 2 | IPA | 12.5 | | 0.9 | 71 | - | - | - | 50 | 0.8 | 0 | 2 | 2 | 1.4 | 69 | 4 | 90 | Accepted |
| Comparative Example 3 | Sebacic acid MPD | 0.5 7.5 | | 0.7 | 64 | - | - | - | 50 | 0.6 | 2 | 2 | 2 | 1.7 | 51 | 3 | 80 | Accepted |
| Comparative Example 4 | Sebacic acid MPD | 0.5 7.5 | | 0.7 | 64 | 70 | 4 × 1 | - | 50 | 0.6 | 26 | 60 | 3 | 4.4 | 107 | 100 | 2) | Rejected |
| Comparative Example 5 | | | - | 0.7 | 80 | - | - | - | 50 | 0.6 | 6 | 3 | 2 | 2 | 58 | 4 | 130 | Accepted |
| Comparative Example 6 | | | - | 0.7 | 80 | 85 | 2 × 1 | - | 50 | 0.6 | 17 | 47 | 2 | 2.2 | 63 | >300 | 140 | Rejected |
| Comparative Example 7 | | | - | 0.7 | 80 | 120 | 5 × 5 | 200 °C, 2 min | 50 | 0.6 | 35 | 5 | 4 | 4 | 230 | <100 | 2) | Rejected |

1) (MD) × (TD)
2) Not heat sealable

EP 3 434 442 A1

[Table 2]

| | Polyester | | | | Production | | | | Evaluation of sealant film | | | | | | | | | Evaluation of sealability of strip tape |
|---|---|---|---|---|---|---|---|---|---|---|---|---|---|---|---|---|---|---|
| | Other monomer units | | IV (dL/g) | Tg (°C) | Stretching temperature (°C) | stretching ratio [1] | Heat fixation roll temperature | Film thickness (μm) | IV (dL/g) | X (%) | Thermal shrinkage ratio (%) | | Young's modulus (GPa) | Tensile strength (MPa) | Tensile elongation (%) | HS able temperature (°C) | | |
| | Type | Content (mol%) | | | | | | | | | MD | TD | | | | | | |
| Example 13 | IPA | 7.5 | 0.9 | 75 | 90 | 2 × 1 | 90°C | 50 | 0.8 | 2 | 27 | -3 | 2.0 | 63 | >300 | 100 | | Accepted |
| Example 14 | IPA | 7.5 | 0.9 | 75 | 90 | 2 × 1 | 110°C | 50 | 0.8 | 3 | 11 | 3 | 2.3 | 68 | >300 | 100 | | Accepted |
| Example 15 | IPA TMA | 7.5 0.05 | 0.9 | 75 | 90 | 2 × 1 | 90°C | 50 | 0.8 | 2 | 25 | -2 | 2.1 | 64 | >300 | 100 | | Accepted |
| 1) (MD) × (TD) | | | | | | | | | | | | | | | | | | |

Example 16

Solid phase polymerization pellets (pellet B) were produced as described in Example 1, except that a slurry consisting of 98.0 parts by mass of terephthalic acid, 2.0 parts by mass of isophthalic acid and 44.8 parts by mass of ethylene glycol was used. An inherent viscosity of the copolymerized polyester thus obtained was 0.9 dL/g. A ratio of monomer components constituting the copolymerized polyester was determined as described in Example 1, and terephthalic acid units:isophthalic acid units:ethylene glycol units:diethylene glycol units = 49.0:1.0:48.75:1.25 (molar ratio). A glass transition temperature (Tg) of the copolymerized polyester obtained was 79 °C.

Film formation (co-extrusion)

The pellet B and the solid phase polymerization pellets produced in Example 1 (pellet A) were dried in a dryer at 120 °C overnight. Then, the pellet B was uniaxially kneaded in a first extruder (cylinder temperature: 260 to 280 °C), the pellet A was uniaxially kneaded in a second extruder (cylinder temperature: 260 to 280 °C). Then, the molten resin in the second extruder was divided in a first feed block, and these molten resins were merged in a second feed block such that the molten resin in the second extruder was outside of the molten resin in the first extruder, and extruded from a T-die over a cooling roll at 80 °C. Thus, an unstretched co-extruded film with a width of 300 mm which had a layer structure consisting of three 30 $\mu$m [polyester (A)]/40 $\mu$m [polyester (B)]/30 $\mu$m [polyester (A)] layers was produced. The unstretched co-extruded film obtained was cut into 100 mm $\times$ 100 mm square, which was then, while being fixed by four sides by a chuck, subjected to pantograph uniaxial stretching [stretching ratio: 2, stretching direction: flow direction (MD) during film formation] at 90 °C. A stretched film was produced and evaluated as described in Example 1, except that the stretched film obtained was used. Thicknesses of the layers after the stretching were 15 $\mu$m [polyester (A)]/20 $\mu$m [polyester (B)]/15 $\mu$m [polyester (A)]. The results are shown in Table 3. A maximum shrinkage direction in measurement of a thermal shrinkage ratio was a stretching direction (a flow direction during film formation). A maximum shrinkage direction in measurement of a thermal shrinkage ratio was a stretching direction (a flow direction during film formation).

Example 17

A stretched film was produced and evaluated as described in Example 16, except that thicknesses of three layers in an unstretched film were 4 $\mu$m/92 $\mu$m/4 $\mu$m. Thicknesses of the layers after the stretching were 2 $\mu$m/46 $\mu$m/2 $\mu$m. The results are shown in Table 3. A maximum shrinkage direction in measurement of a thermal shrinkage ratio was a stretching direction (a flow direction during film formation). A maximum shrinkage direction in measurement of a thermal shrinkage ratio was a stretching direction (a flow direction during film formation).

Example 18

A stretched film was produced and evaluated as described in Example 16, except that thicknesses of three layers in an unstretched film were 60 $\mu$m/80 $\mu$m/60 $\mu$m. Thicknesses of the layers after the stretching were 30 $\mu$m/40 $\mu$m/30 $\mu$m. The results are shown in Table 3. A maximum shrinkage direction in measurement of a thermal shrinkage ratio was a stretching direction (a flow direction during film formation). A maximum shrinkage direction in measurement of a thermal shrinkage ratio was a stretching direction (a flow direction during film formation).

[Table 3]

| | Layer/thickness | Polyester Other monomer units Type | Polyester Other monomer units Content (mol%) | IV (dL/g) | Tg (°C) | Stretching temperature (°C) | Stretching ratio[1] | Heat fixation roll temperature | Film thickness (μm) | IV (dL/g) | X (%) | Thermal shrinkage ratio (%) MD | Thermal shrinkage ratio (%) TD | Young's modulus (GPa) | Tensile strength (MPa) | Tensile elongation (%) | HS able temperature (°C) | Evaluation of sealability of strip tape |
|---|---|---|---|---|---|---|---|---|---|---|---|---|---|---|---|---|---|---|
| Example 16 | First layer /15 μm | IPA | 7.5 | 0.9 | 75 | | | | | | | | | | | | | |
| | Second layer 120 μm | IPA | 1.0 | 0.9 | 79 | 80 | 2 × 1 | - | 50 | 0.8 | 3 | 46 | 1 | 2.1 | 65 | >300 | 100 | Accepted |
| | Third layer /15 μm | IPA | 7.5 | 0.9 | 75 | | | | | | | | | | | | | |
| Example 17 | First layer /2 μm | IPA | 7.5 | 0.9 | 75 | | | | | | | | | | | | | |
| | Second layer /46 μm | IPA | 1.0 | 0.9 | 79 | 80 | 2 × 1 | - | 50 | 0.8 | 8 | 46 | 1 | 2.0 | 63 | >300 | 100 | Accepted |
| | Third layer /2 μm | IPA | 7.5 | 0.9 | 75 | | | | | | | | | | | | | |
| Example 18 | First layer /30 μm | IPA | 7.5 | 0.9 | 75 | | | | | | | | | | | | | |
| | Second layer /40 μm | IPA | 1.0 | 0.9 | 79 | 80 | 2 × 1 | - | 100 | 0.8 | 3 | 46 | 2 | 2.1 | 64 | >300 | 110 | Accepted |
| | Third layer /30 μm | IPA | 7.5 | 0.9 | 75 | | | | | | | | | | | | | |

1) (MD) × (TD)

EP 3 434 442 A1

18

EXPLANATION OF LETTERS OR NUMERALS

1: Paper substrate
2: Strip tape

**Claims**

1. A sealant film comprising a layer made of polyester (A) comprising terephthalic acid units, ethylene glycol units, diethylene glycol units and other comonomer units, wherein
polyester (A) comprises 25 to 50 mol% of terephthalic acid units, 25 to 49.5 mol% of ethylene glycol units, 0.5 to 2.5 mol% of diethylene glycol units and 2 to 25 mol% of other comonomer units having 5 or more carbon atoms,
a crystallinity degree of the sealant film is less than 16 %, and
the sealant film is a stretched film having a shrinkage ratio of 6 % or more in a maximum shrinkage direction when it is allowed to stand at 125 °C for 20 sec.

2. The sealant film as claimed in Claim 1, wherein an elongation at break as determined by a tensile test under the conditions of a temperature of 23 °C, a relative humidity of 65 % and a tension rate of 50 mm/min is 150 % or more.

3. The sealant film as claimed in Claim 1 or 2, wherein the polyester (A) comprises isophthalic acid units.

4. The sealant film as claimed in any of Claims 1 to 3, wherein the sealant film is a single-layer film with a thickness of 20 to 200 $\mu$m.

5. The sealant film as claimed in any of Claims 1 to 3, wherein
the sealant film is a multi-layer film comprising a layer made of polyester (A) and a layer made of polyester (B),
polyester (B) comprises 45 to 50 mol% of terephthalic acid units, 42.5 to 49.5 mol% of ethylene glycol units, 0.5 to 2.5 mol% of diethylene glycol units and 0 to 5 mol% of other comonomer units having 5 or more carbon atoms,
the layer made of polyester (A) is disposed in at least one of the surfaces, and
formula (1) is satisfied;

$$a - b \geq 1 \quad (1)$$

wherein

a: a content of the other comonomer units in polyester (A) (mol%)
b: a content of the other comonomer units in polyester (B) (mol%).

6. The sealant film as claimed in Claim 5, wherein the layer made of polyester (A) has a thickness of 2 to 200 $\mu$m and the layer made of polyester (B) has a thickness of 5 to 100 $\mu$m.

7. A sealing tape produced by slitting the sealant film as claimed in any of Claims 1 to 6.

8. A strip tape for a packaging container made of the sealing tape as claimed in Claim 7.

9. A method for producing the sealant film as claimed in any of Claims 1 to 6, comprising extrusion-molding polyester (A) to form a film and then uniaxially stretching the film.

10. The method for producing the sealant film as claimed in Claim 9, wherein a stretching ratio of the uniaxial stretching is 1.1 to 3.5.

11. A method for producing the sealant film as claimed in any of Claims 1 to 6, comprising extrusion-molding polyester (A) to form a film and then biaxially stretching the film.

**12.** The method for producing the sealant film as claimed in Claim 11, wherein an area stretching factor in the biaxial stretching is 1.1 to 9.0.

[FIG.1]

Inside

## INTERNATIONAL SEARCH REPORT

| International application No. |
|---|
| PCT/JP2017/011274 |

| A. CLASSIFICATION OF SUBJECT MATTER |
|---|
| *B29C61/06*(2006.01)i, *B29C55/02*(2006.01)i, *C08J5/18*(2006.01)i, *B65D65/40* (2006.01)n, *C08G63/183*(2006.01)n |

According to International Patent Classification (IPC) or to both national classification and IPC

| B. FIELDS SEARCHED |
|---|
| Minimum documentation searched (classification system followed by classification symbols) |
| B29C61/06, B29C55/02, C08J5/18, B65D65/40, C08G63/183 |

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2014/175313 A1 (Toyobo Co., Ltd.), 30 October 2014 (30.10.2014), paragraphs [0001], [0006] to [0064] & US 2016/0108171 A1 paragraphs [0001], [0020] to [0084] & JP 14-175313 A1 & EP 2990455 A1 & CN 105189687 A & KR 10-2016-0002852 A & TW 201446830 A | 1-4,7-12 |
| Y | JP 2006-305975 A (Fujimori Kogyo Co., Ltd.), 09 November 2006 (09.11.2006), paragraphs [0022] to [0023] (Family: none) | 1-4,7-12 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 May 2017 (08.05.17) | 23 May 2017 (23.05.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**EP 3 434 442 A1**

**INTERNATIONAL SEARCH REPORT**

International application No.

PCT/JP2017/011274

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2007-002008 A  (Toyobo Co., Ltd.), 11 January 2007 (11.01.2007), claim 1; paragraphs [0027] to [0029], [0039] to [0041]; tables 1 to 2 (Family: none) | 1-4,7-12 |
| Y | JP 05-032800 A  (Daicel Chemical Industries, Ltd.), 09 February 1993 (09.02.1993), paragraphs [0083], [0100] to [0101], [0105], [0112]; table 3 (Family: none) | 2,7-8 |
| Y | JP 2007-176495 A  (Nihon Tetra Pak Kabushiki Kaisha), 12 July 2007 (12.07.2007), claim 1; paragraphs [0001] to [0003], [0026], [0044] (Family: none) | 7-8 |
| A | JP 2001-031845 A  (Kuraray Co., Ltd.), 06 February 2001 (06.02.2001), entire text; all drawings & WO 2001/005865 A1     & AU 5105900 A | 1-12 |

Form PCT/ISA/210 (continuation of second sheet) (January 2015)

**EP 3 434 442 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015066802 A